Europäisches Patentamt

(19) European Patent Office

Office européen des brevets

(11) Publication number: **0 152 102**
**B1**

## (12) EUROPEAN PATENT SPECIFICATION

(45) Date of publication of patent specification: **02.08.89**

(21) Application number: **85101505.7**

(22) Date of filing: **12.02.85**

(51) Int. Cl.⁴: **B 32 B 7/12,** C 09 J 3/16,
C 08 K 9/10, C 08 K 5/12,
C 08 G 18/16

(54) **A process for preparing a composite laminate film.**

(30) Priority: **14.02.84 JP 25910/84**

(43) Date of publication of application:
**21.08.85 Bulletin 85/34**

(45) Publication of the grant of the patent:
**02.08.89 Bulletin 89/31**

(84) Designated Contracting States:
**BE CH DE FR GB IT LI NL**

(56) References cited:
**EP-A-0 171 919
DE-A-1 694 079
FR-A-1 522 310
GB-A-1 035 903
GB-A-1 428 834
US-A-4 080 238**

The file contains technical information
submitted after the application was filed and
not included in this specification

(73) Proprietor: **KUREHA KAGAKU KOGYO
KABUSHIKI KAISHA**
**9-11 Horidome-cho 1-chome Nihonbashi Chuo-
ku**
**Tokyo 103 (JP)**

(72) Inventor: **Okada, Yoshio**
**16-1 Maehara Nishiki-machi**
**Iwaki-shi Fukushima-ken (JP)**
Inventor: **Igarashi, Yuriko**
**174 Kaminakada Nishiki-machi**
**Iwaki-shi Fukushima-ken (JP)**

(74) Representative: **Kador . Klunker . Schmitt-Nilson
. Hirsch**
**Corneliusstrasse 15**
**D-8000 München 5 (DE)**

## Description

The present invention relates to a process for preparing a composite laminate film having high peel strength and high transparency comprising pressure-laminating at least two mutually different films to each other via an adhesive agent of urethanes (hereinafter referred to as "urethane adhesive"), containing microcapsules of 3 to 50 µm in diameter in an amount of 0.05 to 5% by weight of the urethane adhesive, said microcapsules enclosing a hardening accelerator comprising an organo-metallic compound.

Although plastic films have come to be indispensable material for packaging various articles, the performance demanded for the plastic films used for packaging has come to be strict and numerous day by day, and at present, such performance cannot be provided by a single film. Accordingly, various multilayered films are utilized for satisfying the demanded performance as a whole.

In this case, to the adhesives used for preparing the multi-layered film, there are various demands other than adhesive strength, for instance, heat-resistance, transparency, etc., and in this point, urethane adhesive has been used as the adhesive for various laminate films because of the excellent performance thereof.

However, the problem in using a urethane adhesive is that the hardening speed thereof is very low and accordingly, a specified preparation of the laminate film is carried out in a manner such as that comprising winding up the laminated film in which the adhesive is not yet hardened and aging the thus wound laminate film in a reaction chamber at a high temperature, thereby completing the hardening of the adhesive.

Such a process of preparing the laminate film demands a large factory-site and it takes a long time period for the preparation of the laminate film.

Accordingly, trials have been carried out for accelerating the hardening of urethane adhesives. One of the trials is the adoption of a higher temperature in the reaction, however, in the case where laminating is carried out at a higher temperature, a problem due to the difference of the rates of expansion of the plastic materials to be adhered together has occurred, and there is a demerit that it is very difficult to maintain the plastic material at such a high temperature, and as a result, this method is not a practically sufficient way for solving the problem of aging the not-yet hardened adhesive in the laminate film.

In addition, there is a method of admixing a hardening-accelerator with the urethane adhesive, however, by this method, the adhesive composition in which the hardening-accelerator has been mixed hardens to a certain extent before the use of the adhesive composition and accordingly, it is necessary to add the hardening-accelerator to the urethane adhesive every time in preparing the composite laminate film.

Furthermore, the monomer for preparing the urethane adhesive is generally high in viscosity and a complicated operation in preparing the adhesive is required. Accordingly, this method is not practical.

In short, since there is no practical and effective countermeasure for accelerating the urethane adhesive, an effective solution thereof has been strongly demanded.

US—A—4 080 238 discloses a process for preparing a composite laminate, comprising pressure laminating different films via a urethane adhesive mixed with a (meth) acrylate monomer. The adhesive contains micro capsules of 10 to 1200 µm in diameter, in an amount of 1.1 to 30% by weight. The micro capsules, having a wall composition consisting of formaldehyde, cross-linked gelatine, enclose a hardening accelerator of an amine which may contain an organo-metallic compound. Thus the gelatine capsules of US—A—4 080 238 are not organic solvent resistant.

In consideration of the above-mentioned conditions, the present inventors have studied the method for completing the preparation of laminate films within a shorter time period by the use of the urethane adhesive, and as a result, they have attained the present invention.

Namely, the purpose of the present invention is to satisfy the thus demanded various performances in the plastic films for packaging and to provide a process for preparing the laminate film which can solve the above-mentioned various demerits of the conventional process.

This purpose is attained with a process according to the claim.

Detailed description of the invention

The present invention comprises the step of pressure-laminating at least two mutually different plastic films to each other via a urethane adhesive which contains microcapsules enclosing a specific hardening-accelerator, thereby obtaining a composite laminate film comprising two mutually different plastic films adhered together via the adhesive agent. Namely, the present invention is based on the finding that when the hardening-accelerator for the urethane adhesive is microencapsulated, and after adding and dispersing the microcapules into the urethane adhesive the thus obtained urethane adhesive containing the microcapsules is used for adhering the two mutually different plastic films to each other, the urethane adhesive containing the microcapsules does not harden before the use thereof and after breaking the microcapsules by pressure-laminating, the hardening-accelerator hardens the urethane adhesive extremely rapidly.

Namely, in the present invention, as the adhesive, a urethane adhesive containing microcapsules which is prepared by dispersing a suitable amount of the microcapsules enclosing a hardening-accelerator for a urethane adhesive in the urethane adhesive is used, and the amount of the microcapsules dispersed into the urethane adhesive is in the range of from 0.05 to 5% by weight of the urethane adhesive. The size of the microcapsule is in the range of from 3 to 50 micrometers. As the hardening-accelerator tin compounds of a large accelerating effect selected from the group of dioctyltin diiso-octylthioglycolate, dioctyltin maleate, dioctyltin dilaurate, dibutyltin dimaleate and dibutyltin dilaurate are used.

The composition of the urethane adhesive which contains the microcapsules enclosing the hardening-accelerator is not restricted. However, as the polyol component which is one of the components of urethane adhesive, for instance, polyol-prepolymer such as polyhydroxypolyester obtained from polybasic acid and hydroxy compound or polyether glycol, or polyvalent alcoholic monomer such as ethylene glycol, diethylene glycol, 1,4-butanediol, 1,5-pentanediol, etc. may be used.

As isocyanate which is another component of the urethane adhesive, for instance, tolylene diisocyanate, tolidine diisocyanate, naphthylene diisocyanate, diphenylmethane diisocyanate, etc. or polyisocyanate obtained by preliminarily polycondensing one of the above-mentioned isocyanates may be used.

As a diluent of or a viscosity-regulator for the urethane adhesive, a low-boiling solvent such as ethyl acetate, methyl ethyl ketone, toluene and the like is used for improving the applicability of the urethane adhesive.

Microencapsulation of the hardening-accelerator which is added to the urethane adhesive of the present invention can be carried out in the case where the hardening-accelerator is possibly microencapsulated.

The microcapsules enclosing the hardening-accelerator are produced by dispersing the hardening-accelerator in an aqueous medium containing a water-soluble cationic urea resin, at least one prepolymer selected from the group consisting of melamine-formaldehdye prepolymer, urea-formaldehyde prepolymer and melamine-urea-formaldehyde prepolymer, and a low molecular weight anionic surfactant selected from the group consisting of salts of aliphatic acids, sulfate esters of higher alcohols and salts of alkylarylsulfonic acid and polycondensing the water-soluble cationic urea resin and the prepolymer by adding an acid catalyst, while causing complex-coacervation between the water-soluble cationic urea resin and the low molecular weight anionic surfactant.

According to the present invention, one of the two plastic films to be laminated together is painted with the urethane adhesive containing the microcapsules enclosing the hardening-accelerator, and after superposing another plastic film on the thus painted plastic film, the thus superposed film is given pressure on, thereby breaking the microcapsules and making the thus freed hardening-accelerator react to the urethane adhesive to complete the lamination of the two plastic films mutually different from each other. The pressure for breaking the microcapsules depends mainly on the method for microencapsulation, however, in many cases, it is in the range of from 3 to $30.10^5$ Pa (3 to 30 kg/cm$^2$).

The merit of using the microcapsules enclosing the hardening-accelerator for the urethane adhesive according to the present invention is the remarkable reduction of the time for hardening of the urethane adhesive, of course, and in many cases, the adhesion is completed within 10 to 24 hours at ambient temperature of 40°C. In addition, the temperature of painting the urethane adhesive on the plastic film may be raised. Accordingly, the solvent is more easily removed from the painted membrane to improve the operability of painting. Furthermore, it was unexpectedly found that the thus prepared composite laminate film is excellent in transparency as compared to the composite laminate film prepared without using the hardening-accelerator.

The present invention will be definitely explained while referring to the examples of preparation of the microcapsules used according to the present invention and the examples of preparing the composite laminate films according to the present invention as follows.

Preparation example of microcapsules containing hardening-accelerator

Into a mixture of 300 g of urea and 730 g of an aqueous 37% solution of formaldehyde, 3 g of triethanolamine were added, and the thus formed mixture was reacted for 60 min at 70°C, to obtain a prepolymer of urea-formaldehyde resin.

A liquid mixture was prepared by mixing 100 g of the thus obtained prepolymer, 20 g of a water-soluble cationic resin (uramin®-P-1500 (an aqueous 38% solution, made by Mitsui-Toatsu Co., Ltd.)), 200 g of water and 10 g of an aqueous 10% solution of triethanolamine, and after adjusting the pH of the liquid mixture to 5.2 by an aqueous 10% solution of citric acid, 3 g of an aqueous 10% solution of sodium alkylbenzenesulfonate (aqueous solution of Neoperex® made by Kao-Atlas Co., Ltd.) were added to the liquid mixture. Then, the total amount of the thus prepared mixture and 1000 g of dibutyltin dilaurate as the hardening-accelerator were subjected to emulsification in a homogenizer, thereby preparing an emulsion of liquid particles of 2 to 8 micrometers in diameter. The thus formed emulsion was warmed to 50°C while gently stirring thereof, and the pH of the emulsion was made to 2.8 by further adding the aqueous 10% solution of citric acid. After stirring the emulsion for one hour, it was cooled to room temperature, and by continuing the agitation, a slurry of microcapsules was obtained. By passing the slurry through a membrane-filter, microcapsules were collected, washed with water and dried in a hot air dryer at 38°C to obtain 210 g of powdery microcapsules.

Example 1:
Preparation of a composite laminate film

A uniform solution was prepared by admixing 10 kg of ethyl acetate with 2 kg of Nipporan®—3004 (made by Nippon Polyurethane Co., Ltd.) and 10 kg of Colonate®—L (made by Nippon Polyurethane Co., Ltd.), and the thus prepared solution was used as a urethane adhesive as follows.

Namely, into the thus prepared solution of the adhesive, 150 g of the microcapsules which had been prepared as above and contains dibutyltin dilaurate were mixed, thereby obtaining the urethane adhesive containing microcapsules.

After painting a nylon film of 20 micrometers in thickness and 600 mm in width with the thus prepared urethane adhesive containing microcapules by using a gravia-coater, ethyl acetate was evaporated off from the thus painted film in a hot-air dryer at 70°C, and a polypropylene film of 20 micrometers in thickness and 600 mm in width was superposed onto the thus painted nylon film while using a pair of rolls under a pressure of $4.10^5$ Pa (4 kg/cm²), thereby breaking the microcapsules and releasing dibuyltin dilaurate.

Then, the thus superposed film was rolled up and the thus rolled film was kept for 24 hours in a room at 42°C to permit the adhesive to harden completely, thereby obtaining a composite laminate film comprising the nylon film, the adhesive and the polypropylene film.

For carrying out comparison, another composite laminate film was prepared in the same procedures except for using the microcapsules, as follows.

Comparative Example 1:
Preparation of a composite laminate film without using microcapsules

A composite laminate film was prepared in quite the same procedures as in Example 1 except for not using microcapsules.

The results of examination of the properties of the thus prepared two composite laminate films (in Example 1 and in Comparative Example 1) are shown in Tables 1 and 2 below.

TABLE 1
Adhesive strength of the laminate film after 24 hours

| Product prepared in | Peel strength by Tensilon tester |
|---|---|
| Example 1 | Film was cut. larger than 58.86 N (6000 g)/25 mm |
| Comparative Example 1 | 1.23 N (125 g)/25 mm |

TABLE 2
Physical properties after 5 days of preparation

| Product in | Transmittance of parallel light | Haze* |
|---|---|---|
| Example 1 | 90.3 | 3.4 |
| Comparative Example 1 | 87.9 | 5.0 |

(Note) Haze is measured by Haze Meter (Model: TC-HII type) made by Tokyo Denshoku Co., Ltd.

As are seen in Tables 1 and 2, the hardening speed of the adhesive was remarkably raised by the process of the present invention, and the physical properties of the composite laminate film according to the present invention was superior to those of the composite laminate film prepared without using the microcapules enclosing the hardening-accelerator.

Example 2
A uniform solution as a urethane adhesive was prepared by admixing 9 kg of Nipporan® 3124 (made by Nippon Polyurethane Co., Ltd.) and 1 kg of Colonate® HL (made by Nippon Polyurethane Co., Ltd.) with 10 kg of ethyl acetate, and with the thus formed urethane adhesive, 80 g of the microcapsules including dibutyltin dilaurate as those obtained in Example 1 were admixed to prepare the urethane adhesive containing microcapsules.

After painting a polyethylene terephthalate film of 600 mm in width and 20 micrometers in thickness with the thus prepared urethane adhesive containing microcapsules by using a gravia-coater, ethyl acetate was evaporated off from the thus painted film in a hot-air dryer at 70°C, and an aluminum foil of 600 mm in width and 9 micrometers in thickness was superposed onto the painted surface of the polyethylene terephthalate film. Thereafter, the naked aluminum surface of the thus prepared composite material was painted with the same urethane adhesive containing microcapsules by using a gravia-coater and ethyl acetate in the thus painted urethane adhesive containing microcapsules was evaporated off from the thus painted film in a hot-air dryer at 70°C. Then, polypropylene film of 600 mm in width and 60 micrometers in thickness was superposed on the thus just painted surface of the aluminum foil as a component of the composite film. In this connection, the thickness of the layer of the urethane adhesive containing microcapsules was about 3 micrometers after evaporation of ethyl acetate. The roll-pressure in superposing the polypropylene film on the aluminum foil was $3.10^5$ Pa (3 kg/cm$^2$) thereby breaking the microcapsules in the layer of the urethane adhesive containing microcapsules between the polypropylene film and the aluminum foil and releasing the hardening accelerator, dibutyltin dilaurate from the thus broken microcapsules into the adhesive.

The thus obtained laminate composite material in a rolled up state was kept in a chamber at 42°C for 24 hours to effect complete hardening.

Comparative Example 2

For comparison, a laminate material was prepared by the same procedure as in Example 2 except for not using the microcapsules including dibutyltin dilaurate, and the physical properties of both the laminate materials were determined, the results being shown in Table 3.

TABLE 3

| Example or Comparative Example | Reactivity test | Boiling test | | |
|---|---|---|---|---|
| | Rate of unreacted isocyanate group in the laminate composite material (%) | Change of appearance after immersing the laminate composite material in water at 100°C for 30 min | Adhesive strength before and after boiling test N(kg)/25 mm) | |
| | | | before | after |
| Example 2 | 28 | almost unchanged | 24.5 (2.5) | 22.6 (2.3) |
| Comparative Example 2 | 60 | The surfaces of the material became uneven with a partial exfoliation of film(s) | 14.7 (1.5) | 2.9 (0.3) |

**Claim**

A process for preparing a composite laminate film having high peel strength and high transparency, comprising pressure-laminating at least two mutually different films to each other via a urethane adhesive containing micro-capsules of 3 to 50 μm in diameter in an amount of 0.05 to 5% by weight of the urethane adhesive, said microcapsules enclosing a hardening-accelerator comprising an organo-metallic compound, characterized in that the viscosity of the urethane adhesive is adjusted by adding an organic solvent with a low boiling point, the hardening-accelerator being selected from the group consisting of dioctyltin diiso-octylthioglycolate, dioctyltin maleate, dioctyltin dilaurate, dibutyltin dimaleate and dibutyltin dilaurate, and said microcapsules being produced by dispersing said hardening-accelerator in an aqueous medium containing a water-soluble cationic urea resin, at least one prepolymer selected from the group consisting of a melamine-formaldehyde prepolymer, a urea-formaldehyde prepolymer and a melamine-urea-formaldehyde prepolymer, and a low molecular weight anionic surfactant selected from the group consisting of salts of an aliphatic acid, sulfate esters of a higher alcohol and salts of an alkylarylsulfonic acid and polycondensing said water-soluble cationic urea resin and said prepolymer by adding an acid catalyst, while causing complex-coacervation between said water-soluble cationic urea resin and said low molecular weight anionic surfactant.

**Patentanspruch**

Verfahren zur Herstellung eines zusammengesetzten laminierten Films mit großer Abreißfestigkeit und starker Transparenz, bei dem zumindest zwei untereinander versechiedene Filme über ein Urethanklebemittel unter Druck miteinander laminiert werden, das Mikrokapseln von 3 bis 50 μm Durchmesser in einer Menge von 0,05 bis 5 Gew.% des Urethanklebemittels enthält, wobei diese Mikrokapseln einen Härtebeschleuniger beinhalten, der eine metallorganische Verbindung umfaßt, dadurch gekennzeichnet, daß die Viskosität des Urethanklebemittels durch Zusatz eines organischen Lösungsmittels mit niedrigem Siedepunkt eingestellt wird, der Härtebeschleuniger aus der Gruppe ausgewählt ist, die aus Dioctylzinndiisooctylthioglycolat, Dioctylzinnmaleat, Dioctylzinndilaurat, Dibutylzinndimaleat und Dibutylzinndilaurat besteht, und die Mikrokapseln durch Dispersion des Härtebeschleunigers in einem wässrigen Medium, das ein wasserlösliches kationisches Harnstoffharz, zumindest ein Vorpolymerisat, das aus der Gruppe ausgewählt ist, die aus einem Vorpolymerisat von Melamin/Formaldehyd, einem Vorpolymerisat von Harnstoff/Formaldehyd und einem Vorpolymerisat von Melamin/Harnstoff/Formaldehyde besteht, und einen anionischen grenzflächenaktiven Stoff mit geringem Molekulargewicht enthält, der aus der Gruppe ausgewählt ist, die aus Salzen einer aliphatischen Säure, Sulfatestern höherer Akohole und Salzen einer Alkylarylsulfonsäure besteht, und durch Polykondensation des wasserlöslichen kationischen Harnstoffharzes und des Vorpolymerisats durch Zusatz eines sauren Katalysators hergestellt wird, wobei zwischen dem wasserlöslichen kationischen Harnstoffharz und dem anionischen grenzflächenaktiven Stoff mit geringem Molekulargewicht eine Komplex-Koazervation hervorgerufen wird.

## Revendication

Un procédé pour préparer un film composé stratifié ayant une grande résistance au décollement et une grande transparence, comprenant une stratification par pression d'au moins deux films mutuellement différents l'un de l'autre par un adhésif uréthane contenant des microcapsules de 3 à 50 µm de diamètre pour un total de 0,05 à 5% du poids d'adhésif uréthane, lesdites microcapsules renfermant un accélérateur de durcissement comprenant un composé organo-métallique, caractérisé en ce que la viscosité de l'adhésif uréthane est ajustée en ajoutant un solvant organique avec un faible point d'ébullition, l'accélérateur de durcissement étant sélectionné dans le groupe composé de diiso-octylthioglycolate de dioctylétain, maléate de dioctylétain, dilaurate de dioctylétain, dimaléate de dibutylétain et dilaurate de dibutylétain, et lesdites microcapsules étant produites par dispersion dudit accélérateur de durcissement dans un milieu aqueux contenant une résine d'urée cationique soluble dans l'eau, au moins un prépolymère sélectionné dans le groupe composé d'un prépolymère mélamine-formaldéhyde, un prépolymère urée-formaldéhyde et un prépolymère mélamine-urée-formaldéhyde, et un surfactant anionique de faible poids moléculaire sélectionné dans le groupe composé de sels d'un acide aliphatique, d'esters sulfates d'un alcool supérieur et de sels d'un acide sulfonique d'aryle d'alkyle et polycondensation de ladite résine d'urée cationique soluble dans l'eau et dudit prépolymère par addition d'un catalyseur acide, tout en causant une coacervation complexe entre ladite résine d'urée cationique soluble dans l'eau et ledit surfactant anionique de faible poids moléculaire.